# EUROPEAN PATENT APPLICATION

(11) **EP 3 885 063 A1**
(43) Date of publication of application: **29.09.2021**
(21) Application number: 21158006.3
(22) Date of filing: 18.02.2021
(51) Int. Cl.: B22F 1/00, B22F 10/14, B22F 10/62, B22F 10/64, B29C 64/165, B33Y 10/00, B33Y 40/20, B33Y 70/10, C04B 35/632, C08G 18/62, C08G 18/80, C09D 175/04

(54) **OBJECT FORMING LIQUID, KIT FOR PRODUCING THREE-DIMENSIONAL OBJECT, AND THREE-DIMENSIONAL OBJECT PRODUCING METHOD**

(30) Priority: 23.03.2020 JP 2020050582
(71) Applicant: Ricoh Company, Ltd., Tokyo 143-8555 (JP)
(72) Inventor: SATOH, Shinichiroh, Tokyo, 143-8555 (JP)
(74) Representative: Fairbairn, Angus Chisholm

(57) **Abstract**

Provided is a three-dimensional object producing method including a solidified product forming step of applying an object forming liquid to a powder containing a base material and an organic material, to form a solidified product, wherein the object forming liquid contains a compound that can develop a reactively active group by application of energy.

## Description

### BACKGROUND OF THE INVENTION

### Field of the Invention

The present disclosure relates to an object forming liquid, a kit for producing a three-dimensional object, and a three-dimensional object producing method.

### Description of the Related Art

In recent years, there have been increasing needs for producing complicated, fine three-dimensional objects formed of metals and ceramics. Techniques for dealing with the needs, particularly in terms of a high productivity, include a technique of sintering and densifying by a powder metallurgy method, a sintering precursor formed by a binder jetting method.

As a sintering precursor forming method by a binder jetting method, the applicant for patent for the present disclosure has previously proposed a three-dimensional object producing method of discharging a curing agent, which is a water-based ink containing an organometallic salt, to a powder formed of, for example, a metal, glass, or ceramic base material coated with a water-soluble resin, to dissolve the coating resin, and subsequently cross-linking the resin with the organometallic salt, to obtain an object having a high strength (for example, see Japanese Unexamined Patent Application Publication No. 2016-107465).

### SUMMARY OF THE INVENTION

According to one aspect of the present disclosure, a three-dimensional object producing method includes a solidified product forming step of applying an object forming liquid to a powder containing a base material and an organic material to form a solidified product. The object forming liquid contains a compound that can develop a reactively active group by application of energy.

### BRIEF DESCRIPTION OF THE DRAWINGS

FIG. 1 is a schematic view illustrating an example of a three-dimensional object producing apparatus used in a three-dimensional object producing method of the present disclosure;
FIG. 2A is a schematic view illustrating an example of an operation of a three-dimensional object producing apparatus used in a three-dimensional object producing method of the present disclosure;
FIG. 2B is a schematic view illustrating an example of an operation of a three-dimensional object producing apparatus used in a three-dimensional object producing method of the present disclosure;
FIG. 2C is a schematic view illustrating an example of an operation of a three-dimensional object producing apparatus used in a three-dimensional object producing method of the present disclosure;
FIG. 2D is a schematic view illustrating an example of an operation of a three-dimensional object producing apparatus used in a three-dimensional object producing method of the present disclosure;
FIG. 2E is a schematic view illustrating an example of an operation of a three-dimensional object producing apparatus used in a three-dimensional object producing method of the present disclosure;
FIG. 3 is a flowchart illustrating an example of a process flow of a three-dimensional object producing method of a first embodiment;
FIG. 4 is a flowchart illustrating an example of a process flow of a three-dimensional object producing method of a second embodiment;
FIG. 5 is a flowchart illustrating an example of a process flow of a three-dimensional object producing method of a third embodiment;
FIG. 6 is an overall appearance view illustrating an example of a three-dimensional object (green body) formed of laminated layers of solidified products having a complicated inner tube structure;
FIG. 7 is a transparent view illustrating a complicated inner tube structure inside the green body of FIG. 6;
FIG. 8 is a semitransparent view illustrating a complicated inner tube structure inside the green body of FIG. 6;
FIG. 9 is a cross-sectional view of the green body of FIG. 6 in an X direction (1);
FIG. 10 is a cross-sectional view of the green body of FIG. 6 in an X direction (2);
FIG. 11 is a cross-sectional view of the green body of FIG. 6 in an X direction (3); and
FIG. 12 is a cross-sectional view of the green body of FIG. 6 in a Z direction.

### DESCRIPTION OF THE EMBODIMENTS

### (Three-dimensional object producing method)

A three-dimensional object producing method of the present disclosure includes a solidified product forming step of applying an object forming liquid to a powder containing a base material and an organic material to form a solidified product. The object forming liquid contains a compound that can develop a reactively active group by application of energy. The three-dimensional object producing method further includes other steps as needed.

The present disclosure has an object to provide a three-dimensional object producing method for producing, using an object forming liquid having an excellent discharging stability, a three-dimensional object that can retain a shape even when a powder removing liquid is applied.

The present disclosure can provide a three-dimensional object producing method for producing, using an object forming liquid having an excellent discharging stability, a three-dimensional object that can retain a shape even when a powder removing liquid is applied.

In the present disclosure, a "powder" may be referred to as "powder material". An "object forming liquid" may be referred to as "curing liquid" or "reaction liquid". A "solidified product" may be referred to as "cured product". A three-dimensional body formed of laminated layers of solidified products may be referred to as "green body", "sintered body", "compact", or "object". A product obtained by degreasing a "green body" by thermal treatment may be referred to as "degreased body". A "green body" and a "degreased body" may be referred to collectively as "sintering precursor".

Existing techniques have succeeded in achieving a high strength by adding an adhesive material in a powder, dissolving the adhesive material using an inkjet ink, and cross-linking the adhesive material using a cross-linking agent containing an organometallic salt. However, existing techniques have a problem that the objects cannot endure dipping in organic solvents because organometallic salts have a low cross-linking density because of the molecular size and the reaction reversibility of the organometallic salts. Existing techniques also have a problem that base materials such as aluminum and magnesium that are highly reactive with water cannot be used because object forming liquids containing a water-soluble resin and water as main components are used in existing techniques.

According to the present disclosure, the compound that can develop a reactively active group by application of energy (heating), contained in the object forming liquid, cannot develop a reactive activity unless the temperature becomes higher than or equal to a certain temperature. Therefore, the object forming liquid has a remarkably improved storage stability. Moreover, the compound that can develop a reactively active group by application of energy and an organic material contained in the base material form a covalent bond through an irreversible reaction. Therefore, a solidified product to be obtained has a high solvent resistance and does not disintegrate when dipped in an organic solvent-based powder removing liquid. Therefore, it is possible to remove any excessive powder remaining inside or over the surface of a three-dimensional object (green body) without being used for forming the object, even when the three-dimensional object is formed of a laminated layers of solidified products having complicated three-dimensional shapes. Furthermore, an organic material coating the base material is soluble in an organic solvent contained in the object forming liquid. Therefore, it is possible to produce an object without letting the base material contact water.

The object forming liquid and the kit for producing a three-dimensional object used in the three-dimensional object producing method of the present disclosure will be described.

### (Object forming liquid)

The object forming liquid of the present disclosure is an object forming liquid for forming a solidified product by being applied to a powder containing a base material and an organic material soluble in an organic solvent. The object forming liquid contains a compound that can develop a reactively active group by application of energy and further contains other components as needed.

Because the object forming liquid of the present disclosure contains a compound that can develop a reactively active group by application of energy, the object forming liquid has an excellent discharging stability, and can form a three-dimensional object that has a complicated three-dimensional shape, has a good degreasability and a good dimensional accuracy while maintaining a sufficient sintered body strength, and does not undergo shape collapse when dipped in a powder removing liquid for removal of any excessive powder after object production using a powder of, for example, a metal.

### <Compound that can develop reactively active group by application of energy>

An isocyanate group is preferable as the reactively active group of the compound that can develop a reactively active group by application of energy. An isocyanate group reacts with a hydroxyl group contained in a resin serving as an organic material coating the surface of the base material and forms a cross-linked structure. This is effective because the strength of a solidified product to be obtained can be even more enhanced and solvent resistance thereof can be improved.

Polyisocyanate having a blocked isocyanate group is preferable as the compound that can develop a reactively active group by application of energy, because polyisocyanate having a blocked isocyanate group can enhance the strength of a solidified product through reaction with an organic material over the surface of the base material by application of energy (heating), and can improve storage stability of the object forming liquid at room temperature (25 degrees C).

Examples of application of energy include heating, drying, and light irradiation, and heating is preferable.

In the present disclosure, heating refers to obtaining a temperature equal to or higher than 50 degrees C.

The heating temperature is preferably 80 degrees C or higher but 120 degrees C or lower. When the heating temperature is 80 degrees C or higher but 120 degrees C or lower, the strength of a solidified product can be improved through the heating step, and the solidified product can maintain the shape even when dipped in a powder removing liquid.

Examples of polyisocyanate include diisocyanate and trifunctional or higher polyisocyanate.

Examples of diisocyanate include: aromatic or aromatic series-derived polyisocyanates such as tolylene diisocyanate (TDI), diphenylmethane diisocyanate (MDI), polymeric MDI (MDI), tolidine diisocyanate (TODI), naphthalene diisocyanate (NDI), xylylene diisocyanate (XDI), and paraphenylene diisocyanate; aliphatic isocyanates such as isophorone diisocyanate (IPDI) and hexamethylene diisocyanate (HMDI); and lysine diisocyanate (LDI) and tetramethyl xylene diisocyanate (TMXDI).

Examples of trifunctional or higher polyisocyanate include adduct bodies, isocyanurate bodies, and allophanate bodies of diisocyanate.

One kind of polyisocyanate may be used alone or two or more kinds of polyisocyanates may be used in combination.

Polyisocyanate having a block isocyanate group (hereinafter, B-NCO group) produced by application of energy (heating) to an active isocyanate group (hereinafter, NCO group) is preferable as the polyisocyanate having a blocked isocyanate group. The block dissociation temperature of a B-NCO group is preferably 120 degrees C or lower.

It is possible to appropriately adjust the block dissociation temperature of a B-NCO group based on the degree of blocking isocyanate groups of polyisocyanate.

A commercially available product can be used as the polyisocyanate having a blocked isocyanate group. Examples of the commercially available product include BLOCK POLYISOCYANATE (available from Mitsui Chemicals, Inc., XWB-F282, with a block dissociation temperature of 90 degrees C) and DURANATE SBN-70B (available from Asahi Kasei Corporation, with a block dissociation temperature of 110 degrees C).

It is possible to confirm that a reactively active group can be developed by application of energy, by quantification of the NCO amount in the manner described below.

### <Quantification of NCO amount>

The NCO amount in the object forming liquid can be obtained by IR spectrum measurement by a liquid membrane technique.

The object forming liquid is sandwiched between two aperture plates, and an IR spectrum of the object forming liquid in a liquid membrane state is measured. A spacer plate having a hole and having a thickness of 0.1 mm is interposed in the center and the object forming liquid is filled in the hole and measured. When increase in the number of absorption peaks (2,260 cm⁻¹) attributable to NCO between before and after heating is double or more, the definition that a reactively active group can be developed by application of energy is applicable.

The content of the compound that can develop a reactively active group by application of energy is not particularly limited, may be appropriately selected depending on the intended purpose, and is preferably 0.1% by mass or greater but 50% by mass or less and more preferably 0.5% by mass or greater but 30% by mass or less relative to the total amount of the object forming liquid. When the content of the compound is in the range described above, it is possible to reduce residual organic material by degreasing, prevent an insufficient strength of a solidified object to be obtained, prevent thickening or gelation of the object forming liquid, and prevent degradation of liquid storage stability and viscosity stability.

### <Organic solvent>

As the organic solvent, an organic solvent having a saturated vapor pressure of 2,000 Pa or lower at 25 degrees C is used. Therefore, the organic solvent has a high organic material dissolving ability and can form a solidified product having a high strength. Moreover, the organic solvent can improve discharging stability by an anti-drying effect.

The organic solvent is not particularly limited and may be appropriately selected depending on the intended purpose so long as the saturated vapor pressure of the organic solvent at 25 degrees C is 2,000 Pa or lower and the organic solvent is insoluble or sparingly soluble in water.

Because the organic solvent having a saturated vapor pressure of 2,000 Pa or lower at 25 degrees C suppresses drying of nozzles during an out-of-operation time (waiting time) of an apparatus, discharging stability can be improved.

Insolubility or sparing solubility in water means a solubility of 80 g/L or less in water.

As the organic solvent, an organic solvent that can dissolve the resin present over the surface of the base material is selected. Examples of the organic solvent include: aliphatic hydrocarbons or aromatic hydrocarbons such as n-octane, m-xylene, and solvent naphtha; ketones such as diisobutyl ketone, 3-heptanone, and 2-octanone; esters such as butyl acetate, amyl acetate, n-hexyl acetate, n-octyl acetate, ethyl butyrate, ethyl valerate, ethyl caprylate, ethyl octylate, ethyl acetoacetate, ethyl 3-ethoxypropionate, diethyl oxalate, diethyl malonate, diethyl succinate, diethyl adipate, bis 2-ethylhexyl maleate, triacetin, tributyrin, and ethylene glycol monobutyl ether acetate; ethers such as dibutyl ether, 1,2-dimethoxybenzene, and 1,4-dimethoxybenzene; and dimethyl sulfoxide and dihydroterpinyl acetate. One of these organic solvents may be used alone or two or more of these organic solvents may be used in combination.

The content of the organic solvent is preferably 30% by mass or greater but 90% by mass or less and more preferably 50% by mass or greater but 80% by mass or less relative to the total amount of the object forming liquid. When the content of the organic solvent is 30% by mass or greater but 90% by mass or less, the organic solvent has an improved organic material dissolving ability and can improve the strength of a solidified product. Moreover, the organic solvent can prevent drying of nozzles during an out-of-operation time (waiting time) of an apparatus, and can suppress clogging with liquids or nozzle discharging failure.

### <Other components>

The other components are not particularly limited and may be appropriately selected depending on the intended purpose. For example, it is possible to add without limitations, hitherto known materials such as an anti-drying agent, a viscosity modifier, a surfactant, a permeation agent, a defoaming agent, a pH adjuster, an antiseptic, a fungicide, a colorant, a preservative, a stabilizer, and an exothermic agent.

Examples of the exothermic agent include carbon black and metal oxide nanoparticles.

### -Method for preparing object forming liquid-

The method for preparing the object forming liquid is not particularly limited and may be appropriately selected depending on the intended purpose. Examples of the method include a method of adding, mixing, and stirring the compound that can develop a reactively active group by application of energy, the organic solvent, and as needed, the other components.

### -Physical properties of object forming liquid-

The viscosity of the object forming liquid at 25 degrees C is preferably 3 mPa·s or higher but 20 mPa·s or lower and more preferably 5 mPa·s or higher but 10 mPa·s or lower. When the viscosity of the object forming liquid is 3 mPa·s or higher but 20 mPa·s or lower, the object forming liquid has a stable dischargeability through inkjet nozzles, and a solidified product formed by applying the object forming liquid to a powder layer has a sufficient strength and a good dimensional accuracy.

The viscosity can be measured according to, for example, JIS K7117.

The surface tension of the object forming liquid at 25 degrees C is preferably 40 N/m or less and more preferably 10 N/m or greater but 30 N/m or less. When the surface tension of the object forming liquid is 40 N/m or less, the object forming liquid has a stable dischargeability through inkjet nozzles, and a solidified product formed by applying the object forming liquid to a powder layer has a sufficient strength and a good dimensional accuracy.

The surface tension can be measured with, for example, DY-300 available from Kyowa Interface Science Co., Ltd.

It is preferable that an organic material of a powder contain a hydroxyl group, and that the ratio ([NCO]/[OH]) of the isocyanate group [NCO] developed by the polyisocyanate having a blocked isocyanate group to the hydroxyl group [OH] in a region in which the object forming liquid is applied be 0.075 or greater and more preferably 0.10 or greater but 0.50 or less.

When the ratio ([NCO]/[OH]) is 0.075 or greater, solvent resistance can be imparted to a solidified product. That is, when any excessive powder attached on the solidified product is removed using a powder removing liquid, the solidified product can retain the shape.

The ratio ([NCO]/[OH]) can be obtained by measurement of the NCO amount and the OH amount based on IR spectra by a liquid membrane technique in a region in which the object forming liquid is applied to a powder.

A sample of the region in which the object forming liquid is applied to a powder is sandwiched between two aperture plates, and IR spectra in a liquid membrane state is measured. A spacer plate having a hole and having a thickness of 0.1 mm is interposed in the center and the object forming liquid is filled in the hole and measured. In this way, the ratio ([NCO]/[OH]) of the absorption peak (2,260 cm⁻¹) attributable to NCO to the absorption peak (3,400 cm⁻¹) attributable to OH can be obtained.

### (Kit for producing three-dimensional object)

A kit for producing a three-dimensional object of the present disclosure includes a powder, an object forming liquid, and a powder removing liquid.

### <Object forming liquid>

As the object forming liquid, the object forming liquid of the present disclosure containing the compound that can develop a reactively active group by application of energy can be used.

### <Powder removing liquid>

The powder removing liquid contains an organic solvent, and further contains other components as needed.

The organic solvent is not particularly limited and may be appropriately selected depending on the intended purpose so long as the organic solvent does not dissolve (soften) a solidified product but dissolves an organic material in a powder. At least any selected from ketones, halogens, alcohols, esters, ethers, hydrocarbons, glycols, glycol ethers, glycol esters, pyrrolidones, amides, amides, and carbonic acid esters can be used.

Examples of ketone include acetone, methyl ethyl ketone, diethyl ketone, methyl propyl ketone, methyl isobutyl ketone, methyl amyl ketone, cyclohexanone, isophorone, acetophenone, diacetone alcohol.

Examples of halogen include methylene chloride, trichloroethylene, perchloroethylene, HCFC141-b, HCFC-225, 1-bromopropane, chloroform, and orthodichlorobenzene.

Examples of alcohol include methanol, ethanol, butanol, isobutanol, isopropyl alcohol, normal propyl alcohol, tertiary butanol, secondary butanol, 1,3-butanediol, 1,4-butanediol, 2-ethylhexanol, and benzyl alcohol.

Examples of ester include methyl acetate, ethyl acetate, butyl acetate, isobutyl acetate, sec-butyl acetate, methoxybutyl acetate, 3-methoxybutyl acetate, 3-methoxy-3 methyl butyl acetate, ethyl-3-ethoxypropionate, amyl acetate, normal propyl acetate, isopropyl acetate, methyl lactate, ethyl lactate, butyl lactate, propylene glycol monomethyl ether acetate, propylene glycol monomethyl ether propionate, ethyl 3-ethoxypropionate, and dibasic acid ester (DBE).

Examples of ether include dimethyl ether, ethyl methyl ether, diethyl ether, ethylene oxide, tetrahydrofuran, furan, benzofuran, diisopropyl ether, methyl cellosolve, ethyl cellosolve, butyl cellosolve, 1,4-dioxane, methyl tert-butyl ether (MTBE), ethylene glycol dimethyl ether, diethylene glycol dimethyl ether, ethylene glycol diethyl ether, diethylene glycol diethyl ether, triethylene glycol dimethyl ether, diethylene glycol dibutyl ether, dipropylene glycol dimethyl ether, and dipropylene glycol monomethyl ether.

Examples of hydrocarbon include benzene, toluene, xylene, solvent naphtha, normal hexane, isohexane, cyclohexane, ethyl cyclohexane, methyl cyclohexane, cyclohexene, cycloheptane, cyclopentane, heptane, pentamethyl benzene, pentane, methyl cyclopentane, normal heptane, isooctane, normal decane, normal pentane, isopentane, mineral spirit, dimethyl sulfoxide, and linear alkyl benzene.

Examples of glycol include ethylene glycol, diethylene glycol, triethylene glycol, propylene glycol, and dimethoxytetraethylene glycol.

Examples of glycol ester include ethylene glycol monoethyl ether acetate and diethylene glycol monobutyl ether acetate.

Examples of glycol ether include methyl carbitol, ethyl carbitol, butyl carbitol, and methyl triglycol.

Examples of pyrrolidone include 2-pyrrolidone, N-ethyl-2-pyrrolidone, and N-methyl-2-pyrrolidone.

Examples of amide include dimethyl formamide, dimethyl acetoamide, and formamide.

Examples of amine include tetramethyl ethylene diamine, N,N-diisopropyl ethyl amine, ethylene diamine, triethyl amine, diethyl amine, aniline, pyrrolidine, piperidine, morpholine, pyrrole, pyridine, pyridazine, oxazole, thiazole, and 1,3-dimethyl-2-imidazolidinone.

Examples of carbonic acid ester include diethyl carbonate, dimethyl carbonate, propylene carbonate, and ethyl methyl carbonate.

One organic solvent may be used alone or two or more organic solvents may be used in combination.

As the other components, additives such as a surfactant, a defoaming agent, an antiseptic, a fungicide, a pH adjuster, a chelate agent, and a corrosion inhibitor may be added as needed.

### <Powder>

The powder contains a base material and an organic material. It is preferable that the surface of the base material be coated with the organic material, and that the organic material be a resin.

### -Base material-

The base material is not particularly limited and may be appropriately selected depending on the intended purpose so long as the base material has the form of a powder or particles. Examples of the constituent material of the base material include metals, ceramics, carbon, polymers, woods, biocompatible materials, sand, and magnetic materials. In terms of obtaining a three-dimensional object having an extremely high strength, for example, metals and ceramics that can be finally subjected to a sintering treatment (step) are preferable.

Metals are not particularly limited so long as metals are contained as a constituent material. Examples of metals include magnesium (Mg), aluminum (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), and neodymium (Nd), or alloys of these metals. Among these metals, stainless (SUS) steel, iron (Fe), copper (Cu), silver (Ag), titanium (Ti), and aluminum (Al), or alloys of these metals are suitable.

Examples of aluminum alloys include AlSi₁₀Mg, AlSi₁₂, AlSi₇Mg_{0.6}, AlSi₃Mg, AlSi₉Cu₃, Scalmalloy, and ADC1₂. One of these metals may be used alone or two or more of these metals may be used in combination.

Examples of ceramics include oxides, carbides, nitrides, and hydroxides.

Examples of oxides include metal oxides. Examples of metal oxides include silica (SiO₂), alumina (Al₂O₃), zirconia (ZrO₂), and titania (TiO₂). These oxides are mere examples and non-limiting examples. One of these oxides may be used alone or two or more of these oxides may be used in combination.

A commercially available product may be used as the base material. Examples of the commercially available product include pure Al (available from Toyo Aluminium K.K., A1070-30BB), pure Ti (available from Osaka Titanium Technologies Co., Ltd.), SUS316L (available from Sanyo Special Steel Co., Ltd., product name: PSS316L); AlSI₁₀Mg (available from Toyo Aluminium K.K., Si10MgBB); SiO₂ (available from Tokuyama Corporation, product name: EXCELLICA SE-15K), AlO₂ (available from Taimei Chemicals Co., Ltd., product name: TAIMICRON TM-5D), and ZrO₂ (available from Tosoh Corporation, product name: TZ-B53).

A known surface treatment (surface reforming treatment) may be applied to the base material in order to improve adhesiveness with the organic material and improve coatability.

The volume average particle diameter of the base material is not particularly limited, may be appropriately selected depending on the intended purpose, and is, for example, preferably 2 micrometers or greater but 100 micrometers or less and more preferably 8 micrometers or greater but 50 micrometers or less.

When the volume average particle diameter of the base material is 2 micrometers or greater, influence of aggregation of the base material can be reduced, and coatability of the base material with the organic material is increased, making it possible to prevent degradation of the yield, degradation of the productivity of objects, and degradation of treatability and handleability of the base material. When the average particle diameter of the base material is 100 micrometers or less, reduction of the contact points between particles and increase of voids can be prevented, making it possible to prevent degradation of the strength of a three-dimensional object and a sintered body of the three-dimensional object.

The particle size distribution of the base material is not particularly limited and may be appropriately selected depending on the intended purpose. A sharper particle size distribution is preferable.

The volume average particle diameter and particle size distribution of the base material can be measured with a known particle diameter measuring instrument. Examples of the known particle diameter measuring instrument include a particle diameter distribution measuring instrument MICROTRAC MT3000II SERIES (available from MicrotracBel Corporation).

For example, the contour, surface area, circularity, fluidity, and wettability of the base material may be appropriately selected depending on the intended purpose.

The base material can be produced according to a hitherto known method. Examples of the method for producing the base material in the powder or particle form include a fracturing method of breaking a solid into pieces by applying, for example, compression, impacts, and friction, an atomizing method of spraying a molten metal to obtain a quickly cooled powder, a precipitating method of precipitating a component dissolved in a liquid, and a gas phase reaction method of crystallizing particles by vaporization.

The method for producing the base material is not limited to the methods described above. Examples of more preferable methods include the atomizing method because a spherical shape is obtained and particle diameter variation is low. Examples of the atomizing method include a water atomizing method, a gas atomizing method, a centrifugal atomizing method, a plasma atomizing method. Any of these methods can be suitably used.

### -Organic material-

The organic material needs at least be an organic material that contains a reactive functional group, has solubility in the object forming liquid, and can form a cross-linked structure by a covalent bond through a reaction with the compound that can develop a reactively active group by application of energy contained in the object forming liquid.

The organic material is said to be soluble when 90% by mass or greater of the organic material (1 g) is dissolved when the organic material is mixed and stirred in a solvent (100 g) constituting the object forming liquid at 30 degrees C.

It is preferable that the organic material have a low reactivity with a metal (highly active metal) powder having a high activity as a base material, that the organic material before object production (before solidification) be soluble in the powder removing liquid, and that the organic material after object production (after solidification or after cross-linking) be not soluble in the powder removing liquid (not soften when dipped in the powder removing liquid). Particularly, it is preferable that the organic material be soluble in a powder removing liquid having a low solubility in water.

The organic material coating the surface of the base material can suppress dust explosion that occurs when the base material particles have a small size. When the organic material has a low reactivity with a metal (active metal) powder having a high activity as a base material, is soluble in the powder removing liquid before the object forming liquid is applied to the organic material, and is not soluble in the powder removing liquid (does not soften when dipped in the powder removing liquid) after the object forming liquid is applied to the organic material (after the organic material is cross-linked), highly active metals, i.e., water-reactive materials (e.g., aluminum and titanium) can be used as the base material, and a solidified product (three-dimensional object) produced can be prevented from disintegration when dipped in a solvent-based solution.

The reactive functional group is not particularly limited and may be appropriately selected depending on the intended purpose so long as the reactive functional group can form a covalent bond through a reaction with the compound that can develop a reactively active group by application of energy. Examples of the reactive functional group include a hydroxyl group, a carboxyl group, an amide group, a phosphoric acid group, a thiol group, an acetoacetyl group, and an ether bond.

Among these reactive functional groups, a hydroxyl group is preferable as the reactive functional group contained in the organic material in terms of improvement of adhesiveness with the base material and reactivity with the compound that can develop a reactively active group by application of energy.

Further, it is preferable that 95% by mass or greater of the resin be thermally cracked when the resin alone is heated at 450 degrees C, in order that the resin may not inhibit sintering by remaining in a three-dimensional object during sintering.

A resin having a hydroxyl group is preferable as the organic material. Examples of the resin include polyvinyl acetal (with a glass transition temperature of 107 degrees C), polyvinyl butyral (with a glass transition temperature of 67 degrees C), polyacryl polyol (with a glass transition temperature of 80 degrees C), polyester polyol (with a glass transition temperature of 133 degrees C), polybutadiene polyol (with a glass transition temperature of -17 degrees C), ethyl cellulose (with a glass transition temperature of 145 degrees C), and nitrocellulose (with a glass transition temperature of 50 degrees C). Other examples of the resin include partially saponified products of vinyl acetate copolymers (e.g., vinyl chloride-vinyl acetate, and ethylene-vinyl acetate), polyether polyol and phenol-based polyol. One of these resins may be used alone or two or more of these resins may be used in combination. Among these resins, polyacryl polyol is preferable.

The glass transition temperature of the organic material refers to the glass transition temperature of a solidified product of a homopolymer of the organic material. As the glass transition temperature (Tg), a catalogue value of a manufacturer of the organic material is adopted when there is such a catalogue value, and a value measured in the manner described below according to differential scanning calorimetry (DSC) is adopted when there is no such catalogue value.

### -Method for measuring glass transition temperature (Tg)-

A polymerizable monomer can be polymerized according to a typical solution polymerization method.
A: a 10% by mass toluene solution of a polymerizable monomer
B: azobisisobutyronitrile serving as a polymerization initiator: 5% by mass

A and B are sealed in a nitrogen-purged test tube, and shaken in a hot bath of 60 degrees C for 6 hours, to synthesize a polymer. Subsequently, the resultant is reprecipitated in a solvent (e.g., methanol and petroleum ether) in which the polymerizable monomer is soluble and the polymer is insoluble, and subjected to filtration, to extract the polymer. The obtained polymer is subjected to DSC measurement. The glass transition temperature can be measured using DSC120U available from Seiko Instruments Inc. as the DSC instrument at a measuring temperature of from 30 degrees C through 300 degrees C at a temperature elevation rate of 2.5 degrees C per minute.

Among organic materials, organic materials that contain many hydroxyl groups in a molecule thereof not at an end of the molecule, and have a weight average molecular weight and a hydroxyl value greater than or equal to certain values are preferable.

The weight average molecular weight of the organic material is preferably 100,000 or less and more preferably 2,000 or greater but 100,000 or less. An organic material that has a weight average molecular weight of 100,000 or less and is a solid at normal temperature is preferable.

The hydroxyl value of the organic material is preferably 50 mgKOH/g or greater and more preferably 100 mgKOH/g or greater.

A commercially available product may be used as the organic material. Examples of the commercially available product include polyacryl polyol (available from DIC Corporation, e.g., ACRYDIC WFU-580), polyester polyol (available from DIC Corporation, e.g., POLYLITE OD-X-668, available from ADEKA Corporation, e.g., ADEKA NEWACE YG-108), polybutadiene polyol (available from Nippon Soda Co., Ltd., e.g., GQ-1000), polyvinyl butyral (available from Kuraray Co., Ltd., e.g., MO Vital B20H), polyvinyl acetal (available from Sekisui Chemical Co., Ltd., e.g., ESLEC BM-2, KS-1), ethyl cellulose (available from Nisshin & Co., Ltd., e.g., ETHOCEL), and polyacryl (available from Kyoeisha Chemical Co., Ltd., e.g. OLICOX KC-3000).

As the powder, a powder in which the surface of the base material is coated with the organic material is preferable.

The coating thickness of organic material over the base material is preferably 5 nm or greater but 1,000 nm or less, more preferably 5 nm or greater but 500 nm or less, yet more preferably 50 nm or greater but 300 nm or less, and particularly preferably 100 nm or greater but 200 nm or less on the average thickness basis.

In the present disclosure, the coating thickness can be reduced from existing coating thickness levels because a cross-linking reaction by the compound that can develop a reactively active group by application of energy is utilized. Therefore, even a thin film of the organic material can satisfy both of strength and accuracy.

When the average thickness as the coating thickness of the organic material is 5 nm or greater, a solidified product formed of a powder (layer) formed by applying the object forming liquid to the powder has an improved strength, and does not have problems such as shape collapse during post-treatment such as sintering or post-handling. When the average thickness of the organic material is 1,000 nm or less, a solidified product formed of a powder (layer) formed by applying the object forming liquid to the powder has an improved dimensional accuracy.

The average thickness can be obtained by, for example, embedding the powder in, for example, an acrylic resin, exposing the surface of the base material by, for example, etching, measuring the thickness at arbitrary ten positions using, for example, a scanning tunneling microscope STM, an atomic force microscope AFM, and a scanning electron microscope SEM, and calculating the average of the measurements.

The coating ratio (surface coating ratio) at which the surface of the base material is coated with the organic material relative to the surface area of the base material is not particularly limited so long as the surface of the base material is coated enough to achieve the effect of the present disclosure, and is preferably, for example, 15% or higher, more preferably 50% or higher, and particularly preferably 80% or higher.

When the surface coating ratio is 15% or higher, a solidified product formed of a powder (layer) formed by applying the object forming liquid to the powder has a sufficient strength, and does not have problems such as shape collapse during post-treatment such as sintering or post-handling. Moreover, the solidified product formed of a powder (layer) formed by applying the object forming liquid to the powder has an improved dimensional accuracy.

The ratio (%) of the area of portions coated with the organic material to the total area of the surface of a powder particle may be measured for arbitrary ten powder particles appearing in a two-dimensional photographic image of the powder observed, and the average of the ratios of the ten powder particles may be calculated as the surface coating ratio. Alternatively, the surface coating ratio may be obtained by measuring a portion coated with the organic material by element mapping by energy dispersive X-ray spectroscopy such as SEM-EDS.

### -Other components-

The other components are not particularly limited and may be appropriately selected depending on the intended purpose. Examples of the other components include a fluidizer, a filler, a leveling agent a sintering aid, and polymeric resin particles.

The fluidizer is preferable because the fluidizer can facilitate easy and efficient formation of, for example, a layer formed of the powder.

The filler is a material mainly effective for being attached on the surface of the powder or being filled in the voids between particles. The filler has an effect of improving fluidity of the powder, increasing contact points between powder particles and reducing voids, and consequently enhancing strength and dimensional accuracy of a three-dimensional object.

The leveling agent is a material mainly effective for controlling wettability of the surface of the powder. The leveling agent has an effect of, for example, improving permeability of the object forming liquid into the powder, improving strength of a three-dimensional object and the speed of producing the three-dimensional object, and maintaining the shape of the three-dimensional object stably.

The sintering aid is a material effective for improving the sintering efficiency of an obtained solidified product (sintering precursor) when sintering the solidified product. The sintering aid has an effect of, for example, improving strength of the solidified product (sintering precursor), lowering the sintering temperature, and reducing the sintering time.

### -Method for producing powder-

The method for producing the powder is not particularly limited and may be appropriately selected depending on the intended purpose. Preferable examples of the method include a method of coating the base material with the organic material according to a known coating method.

The method for coating the surface of the base material with the organic material is not particularly limited and may be appropriately selected from known coating methods. Preferable examples of known coating methods include a rolling fluidized bed coating method, a spray drying method, a stirring, mixing, and adding method, a dipping method, and a kneader coating method. These coating methods may be performed using, for example, known commercially available various coating machines and granulators.

### -Physical properties of powder-

The volume average particle diameter of the powder is not particularly limited, may be appropriately selected depending on the intended purpose, and is preferably 3 micrometers or greater but 250 micrometers or less, more preferably 3 micrometers or greater but 200 micrometers or less, yet more preferably 5 micrometers or greater but 150 micrometers or less, and particularly preferably 10 micrometers or greater but 85 micrometers or less.

When the volume average particle diameter of the powder is 3 micrometers or greater, the powder has an improved fluidity and can easily form a powder (layer), and laminated layers of the powder have an improved surface smoothness, making it more likely that productivity of a three-dimensional object is improved, and that treatability and handleability, and dimensional accuracy of the three-dimensional object are improved. When the average particle diameter of the powder is 250 micrometers or less, the void between particles of the powder has a small size and a three-dimensional object has a low voidage, contributing to improvement of strength. Hence, the volume average particle diameter of the powder is preferably 3 micrometers or greater but 250 micrometers or less in order to satisfy both of dimensional accuracy and strength.

The particle size distribution of the powder is not particularly limited and may be appropriately selected depending on the intended purpose.

The angle of repose of the powder, as a property of the powder, is preferably 60 degrees or less, more preferably 50 degrees or less, and yet more preferably 40 degrees or less.

When the angle of repose of the powder is 60 degrees or less, it is possible to place the powder at a desired position of a support efficiently and stably.

The angle of repose can be measured with, for example, a powder property measuring instrument (POWDER TESTER PT-N TYPE, available from Hosokawa Micron Corporation).

The powder can be suitably used for easy, efficient production of various three-dimensional objects and structures. The powder can be particularly suitably used in the kit for producing a three-dimensional object of the present disclosure, and the three-dimensional object producing method and the three-dimensional object producing apparatus of the present disclosure.

It is possible to produce a solidified product having a complicated three-dimensional shape easily, efficiently, and with a good dimensional accuracy, only by applying the object forming liquid of the present disclosure to a powder. The solidified product obtained in this way is a green body (sintering precursor) having a sufficient hardness, and is excellent in treatability and handleability without shape collapse even when carried in a hand, put into or out from a mold, or blown with air for removal of any excessive powder. The solidified product may be used as is, or as a sintering precursor, may further be subjected to a sintering treatment to obtain a compact (a sintered body of a three-dimensional object).

### (Three-dimensional object producing method)

A three-dimensional object producing method of the present disclosure includes a solidified product forming step, preferably includes a powder removing step and application of energy, and further includes other steps as needed.

The three-dimensional object producing method of the present disclosure has the first to third embodiments described below.

The three-dimensional object producing method of the first embodiment obtains an intended object (green body) by repeatedly performing a solidified product forming step of applying an object forming liquid to a powder containing an organic material over the surface of a base material, to solidify the organic material in the powder and form a solidified product, and after completing forming an object in this way, performing a heating step (application of energy) of heating the solidified product at a predetermined temperature for a predetermined time, and performing a powder removing step after the heating step.

The three-dimensional object producing method of the second embodiment obtains an intended object (green body) by providing between formation of a powder layer and application of an object forming liquid, a heating step (application of energy) of performing heating with a heater in a solidified product forming step of applying the object forming liquid to a powder containing an organic material over the surface of a base material, to solidify the organic material in the powder and form a solidified product, repeating these steps, and after completing the final solidified product producing step, performing a powder removing step.

The three-dimensional object producing method of the third embodiment obtains an intended object (green body) by providing between formation of a powder layer and application of an object forming liquid, a heating step (application of energy) by infrared irradiation in a solidified product forming step of applying the object forming liquid to a powder containing an organic material over the surface of a base material, to solidify the organic material in the powder and form a solidified product, repeating these steps, and after completing the final solidified product producing step, performing a powder removing step.

### <Solidified product forming step>

The solidified product forming step is a step of applying an object forming liquid to a powder containing a base material and an organic material, to bind particles of the powder with each other in a predetermined region of the powder, to form a solidified product.

The organic material coating the base material can dissolve and crosslink by the action of the object forming liquid. Therefore, when the object forming liquid is applied to the organic material, the organic material dissolves and crosslinks by the cross-linking agent contained in the object forming liquid. Hence, when a thin layer is formed using the powder and the object forming liquid is caused to act on the thin layer, the thin layer solidifies.

### -Formation of powder layer-

The method for placing a powder over a support (object forming stage) to form a powder layer is not particularly limited and may be appropriately selected depending on the intended purpose. Preferable examples of a method for placing a powder in the form of a thin layer include a method using, for example, a known counter rotating mechanism (flattening roller) employed in a selective laser sintering method described in Japanese Patent No. 3607300, a method for spreading a powder to have a form of a thin layer with such a member as a brush, a roller, and a blade, a method for pressing the surface of a powder with a pressing member to spread the powder to have a form of a thin layer, and a method using a known powder laminated object manufacturing apparatus.

Placing a powder over the support in the form of a thin layer using, for example, the counter rotating mechanism, the brush, roller, or blade, and the pressing member as a powder layer forming unit may be performed in, for example, the following manner.

That is, with, for example, the counter rotating mechanism, a powder is placed over the support that is disposed within an outer frame (may also be referred to as, for example, "object forming tank", "mold", "hollow cylinder", or "tubular structure") in a manner that the support can lift upward and downward while sliding against the inner wall of the outer frame. When the support used is a support that can lift upward and downward within the outer frame, the support is disposed at a position slightly lower than the upper-end opening of the outer frame, i.e. at a position lower by an amount corresponding to the thickness of a powder layer, and then a powder is placed over the support. In this way, the powder can be placed over the support in the form of a thin layer.

When the object forming liquid is caused to act on the powder placed in the form of a thin layer in the manner described above, the layer solidifies (the solidified product forming step).

Then, when the powder is placed in the form of a thin layer in the same manner as described above over the solidified product of the thin layer obtained above and the object forming liquid is caused to act on (the layer) of the powder placed in the form of a thin layer, solidification of the powder occurs. This solidification occurs not only in (the layer) of the powder placed in the form of a thin layer but also between (the layer) of the powder and the underlying solidified product of the thin layer obtained by the previous solidification. As a result, a solidified product having a thickness corresponding to about two layers of the powder placed in the form of a thin layer is obtained.

Alternatively, an automatic, quick manner using a known three-dimensional object producing apparatus may be employed to place a powder over the support in the form of a thin layer. Typically, the three-dimensional object producing apparatus includes a recoater (flattening roller) configured to laminate layers of a powder, a movable supplying tank configured to supply the powder onto the support, and a movable forming tank in which the powder is placed in the form of a thin layer and laminated. In the powder laminated object manufacturing apparatus, it is possible to constantly dispose the surface of the supplying tank slightly above the surface of the forming tank by lifting up the supplying tank, by lifting down the forming tank, or by both, it is possible to place the powder in the form of a thin layer by actuating the recoater from the supplying tank side, and it is possible to laminate thin layers of the powder by repeatedly moving the recoater.

The thickness of a layer of the powder is not particularly limited and may be appropriately selected depending on the intended purpose. For example, the average thickness per layer is preferably 30 micrometers or greater but 500 micrometers or less and more preferably 60 micrometers or greater but 300 micrometers or less.

When the average thickness is 30 micrometers or greater, a solidified product (sintering precursor) of (a layer) of the powder, formed by applying the object forming liquid to the powder, has a sufficient strength, and does not have problems such as shape collapse during post-treatment such as sintering or post-handling. When the average thickness is 500 micrometers or less, a solidified product of (a layer) of the powder, formed by applying the object forming liquid to the powder, has an improved dimensional accuracy.

The average thickness may be measured by any known method.

The method for applying the object forming liquid containing a cross-linking agent that can form a covalent bond with a reactive functional group to a (layer) of a powder is not particularly limited and may be appropriately selected depending on the intended purpose. Examples of the method include a dispenser method, a spray method, and an inkjet method. In order to perform these methods, a known apparatus can be suitably used as the solidified product forming unit.

Among these methods, the dispenser method has excellent liquid droplet quantitativity, but has a small coating coverage. The spray method can form a minute jet of the materials easily and has a wide coating coverage and excellent coatability, but has a poor liquid droplet quantitativity and causes the powder to scatter due to a spray current. Hence, in the present disclosure, the inkjet method is particularly preferable. The inkjet method is preferable because the inkjet method is better than the spray method in liquid droplet quantitativity, can obtain a greater coating coverage than can be obtained by the dispenser method, and can form a complicated three-dimensional shape with a good accuracy efficiently.

In the case of the inkjet method, the solidified product forming unit includes nozzles capable of applying the object forming liquid to a powder layer by the inkjet method. Nozzles (discharging heads) of a known inkjet printer can be suitably used as the nozzles, and the inkjet printer can be suitably used as the solidified product forming unit. Preferable examples of the inkjet printer include SG7100 available from Ricoh Company, Ltd. The inkjet printer is preferable because the inkjet printer can drop the object forming liquid from a head in a large amount at a time, can cover a large area, and can realize rapid coating.

In the present disclosure, use of the inkjet printer capable of applying the object forming liquid accurately and highly efficiently is advantageous to the object forming liquid because the object forming liquid, which is free of solid matters such as particles and polymeric high-viscosity materials such as resins, will not, for example, clog or corrode the nozzles or the nozzle heads of the inkjet printer, can efficiently permeate the organic material in the powder when applied (discharged) to a layer of the powder, ensuring an excellent productivity of a three-dimensional object, and will deliver no polymeric components such as resins and hence cause, for example, no unexpected volume increase, ensuring that a solidified product having a good dimensional accuracy can be obtained easily, in a short time, and efficiently.

### <Application of energy>

In the three-dimensional object producing method of the first embodiment, application of energy is a step of heating at a predetermined temperature for a predetermined time, a solidified product obtained by repeating a step of applying an object forming liquid to a powder containing an organic material over the surface of a base material, to cure the solidified product. Among solidified products, products that are cured in the heating step serving as application of energy may be referred to as cured products. After the heating step, a powder removing step is performed.

In the three-dimensional object producing method of the second and third embodiments, the heating step is a step of heating a powder layer with a heater or by infrared irradiation each time one powder layer is formed by application of an object forming liquid to a powder containing an organic material over the surface of a base material, to form a solidified layer. After the series of this step is performed, a powder removing step is performed.

In application of energy, a solidified product is taken out together with an object forming tank, and heated and dried at a predetermined temperature at a predetermined atmospheric pressure, to activate the compound that can develop a reactively active group by application of energy, contained in the object forming liquid, and evaporate the main organic solvent contained in the object forming liquid. As a result, the organic material coating the surface of the base material of the powder in an object forming part reacts with the compound that can develop a reactively active group by application of energy, and becomes an organic material having different physical properties from the organic material coating the base material of the powder at a non-object forming part.

Examples of the drying unit used in the heating and drying step include a drier and a thermo-hygrostat chamber.

Examples of the atmosphere in drying include a vacuum atmosphere and a normal pressure atmosphere. It is preferable to perform drying in a vacuum temperature in order to quickly evaporate the main organic solvent.

The drying temperature is preferably 80 degrees C or higher but 120 degrees C or lower.

The drying time is preferably from one hour through three hours.

### <Powder removing step>

The powder removing step is a step of removing powder attached on a solidified product from the solidified product using a powder removing liquid. It is preferable to perform the powder removing step by a method of dipping a solidified product in the powder removing liquid. By dipping a solidified product in a powder removing liquid that does not dissolve (soften) the solidified product but dissolves the organic material contained in the powder, it is possible to remove any excessive powder attached on the surface of the solidified product or attached inside the solidified product.

That is, by removing powder attached on the solidified product using the powder removing liquid, it is possible to dissolve a non-object forming part, which is a region in which the object forming liquid has not been applied to the powder, while preventing dissolution of an object forming part solidified through application of the object forming liquid to the powder.

A three-dimensional object (green body) formed of laminated layers of solidified products is present in a state of being buried in a non-object forming part (unsolidified powder) to which the object forming liquid is not applied. When the green body is taken out from the buried state, excessive (unsolidified) powder is attached around the green body, i.e., over the surface of the green body and inside the structure of the green body. Therefore, it is difficult to remove the excessive powder. When the green body has complicated bosses and recesses in the surface or has a flow path-like internal structure, it is even more difficult to remove the excessive powder. Because typical binder jetting methods cannot impart a high strength to a green body, the green body may disintegrate when blown with air at a high air blowing pressure (0.3 MPa or higher).

A three-dimensional object (green body) formed of laminated layers of solidified products formed of the powder and the object forming liquid used in the present disclosure obtains a strength enough to endure the air blowing pressure, because dissolution and coagulation of the organic material coating the base material is better facilitated by the compound that can develop a reactively active group by application of energy, contained in the object forming liquid.

The strength of the solidified product, expressed by three-point bending stress, is preferably 3 MPa or higher and more preferably 5 MPa or higher.

Not only is the strength of the green body improved, but also any excessive powder attached on the surface of the green body or inside the green body can be easily removed by dipping of the green body in the powder removing liquid that can dissolve the organic material coating the base material, because the organic material that has solidified does not dissolve in the powder removing liquid and the organic material that has not solidified dissolves in the powder removing liquid.

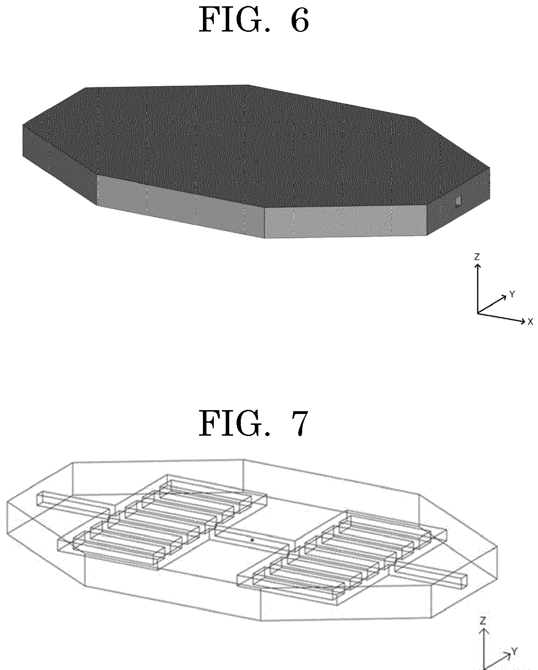

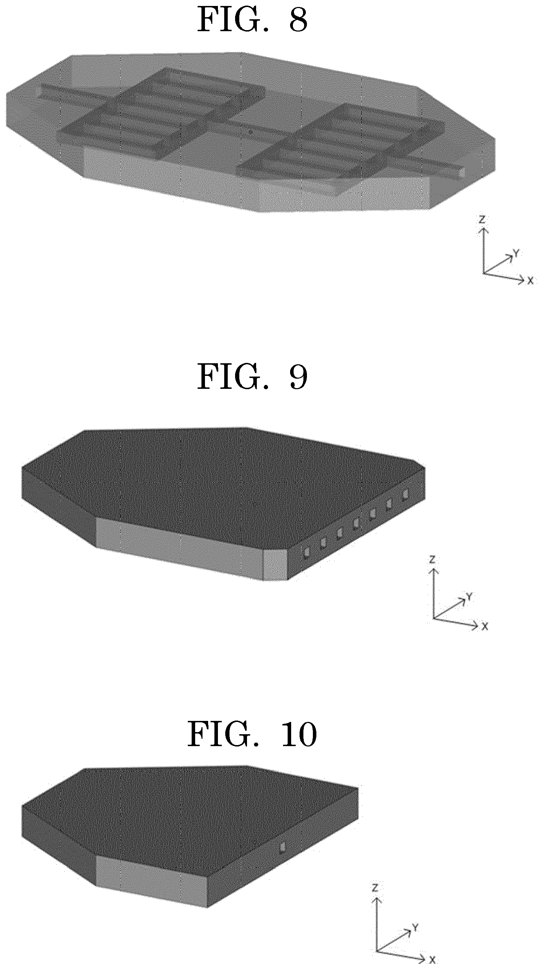

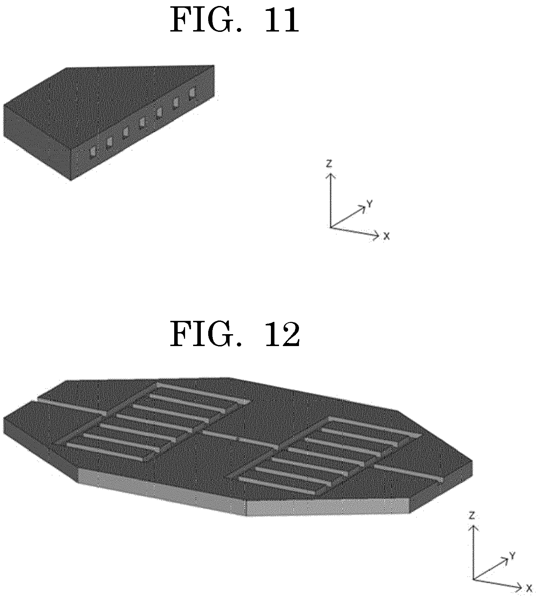

Particularly, in order to produce a green body having a complicated internal structure as illustrated in FIG. 6 to FIG. 12, there is a need that any excessive powder inside the green body can be removed easily and without fail. Only by air blowing, air may not reach inside and it is difficult to remove the excessive powder.

The volume of the powder removing liquid relative to the green body is not particularly limited and may be appropriately selected depending on the intended purpose.

Further, when the green body softens by dipping in the powder removing liquid, an object that is just like object formation data cannot be obtained due to, for example, collapse of thin-tubular shapes and thin wall shapes.

The type 00 durometer hardness of the green body after the green body is dipped in the powder removing liquid (organic solvent) for one hour is preferably 80 or greater, more preferably 90 or greater, and yet more preferably 95 or greater but 100 or less. When the type 00 durometer hardness of the green body is 90 or greater, shape collapse does not occur irrespective of the shape.

The type 00 durometer harness is measured in the manner described below. A test piece having the same dimensions as the type A2 test piece compliant with JIS K 7139 is formed, and the organic solvent component in the object forming liquid is dried from the test piece, to obtain a green body test piece. The green body test piece is left to stand at the atmospheric pressure at 25 degrees for one hour in a state of being tightly sealed inside a container and entirely dipped in the powder removing liquid. Subsequently, the green body test piece is taken out from the container, and the powder removing liquid attached on the surface is wiped off. The green body test piece is left to stand still directly over a A5052 plate having a plate thickness of 5 mm, and a pressing surface of a type 00 durometer compliant with ASTM D 2240 is brought into close contact with the green body test piece by hand pressing at 25 degrees C at the atmospheric pressure within 30 seconds from when the green body test piece is taken out from the container.

The dipping time is preferably from one hour through three hours.

The dipping temperature is preferably from room temperature through 50 degrees C.

Examples of the dipping method include still standing, ultrasonic irradiation, stirring, and stirring after still standing.

### -Powder storage-

A powder storage is a member in which the powder is stored. For example, the size, shape, and material of the powder storage are not particularly limited and may be appropriately selected depending on the intended purpose. Examples of the powder storage include a storing tank, a bag, a cartridge, and a tank.

### -Object forming liquid storage-

An object forming liquid storage is a member in which the object forming liquid is stored. For example, the size, shape, and material of the object forming liquid storage are not particularly limited and may be appropriately selected depending on intended purpose. Examples of the object forming liquid storage include a storing tank, a bag, a cartridge, and a tank.

### <Other steps and other units>

Examples of the other steps include a sintering step, a surface protection treatment step, and a painting step.

Examples of the other units include a sintering unit, a surface protection treatment unit, and a painting unit.

The drying step is a step of drying a three-dimensional object (green body) formed of laminated layers of solidified products obtained in the solidified product forming step. In the drying step, not only the water contained in the green body but also an organic material may be removed (degreased). Examples of the drying unit include a known drier and a known thermo-hygrostat chamber.

The sintering step is a step of sintering a three-dimensional object (green body) formed of laminated layers of solidified products formed in the solidified product forming step. Through the sintering step, the three-dimensional object can become a metal or ceramic compact (a sintered body of the three-dimensional object) formed by densification and integration of the green body. Examples of the sintering unit include a known sintering furnace.

The surface protection treatment step is a step of, for example, forming a protective layer over a three-dimensional object (green body) formed of laminated layers of solidified products formed in the solidified product forming step. Through the surface protection treatment step, for example, durability that enables the solidified product to be subjected to, for example, actual use without any additional care can be imparted to the surface of the solidified product. Specific examples of the protective layers include a water-resistance layer, a weather-resistant layer, a light-resistant layer, a heat-insulating layer, and a gloss layer. Examples of the surface protection treatment unit include a known surface protection treatment apparatus such as a spray apparatus and a coating apparatus.

The painting step is a step of painting a three-dimensional object (green body) formed of laminated layers of solidified products formed in the solidified product forming step. Through the painting step, a green body can be colored in a desired color. Examples of the painting unit include known painting apparatuses such as painting apparatuses using, for example, spray, a roller, and a brush.

The mass of the organic material contained in the sintered body obtained in the sintering step is 5% by mass or less relative to the mass of the organic material contained in the green body before the powder removing step.

Embodiments of the three-dimensional object producing method of the present disclosure will be described in detail with reference to the drawings.

### <First embodiment>

The three-dimensional object producing method of the first embodiment obtains an intended object by repeatedly performing a solidified product forming step of applying an object forming liquid to a powder containing an organic material over the surface of a base material, to solidify the organic material in the powder and form a solidified product, and after completing forming an object in this way, performing a heating step of heating the object at a predetermined temperature for a predetermined time, and performing a powder removing step after the heating step.

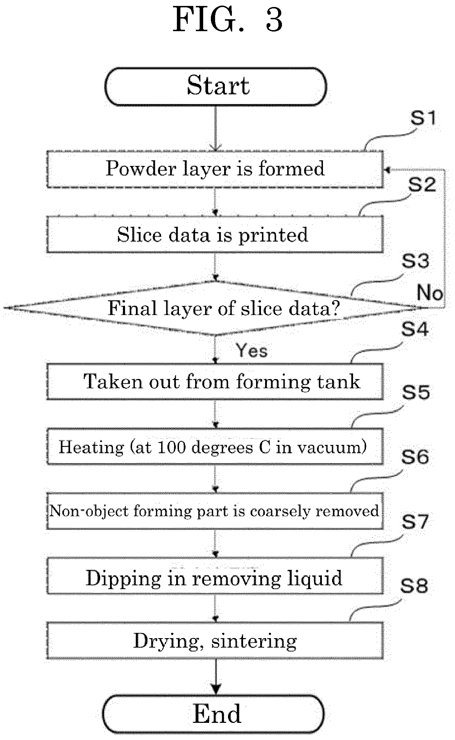

FIG. 3 is a flowchart illustrating an example of a process flow of the three-dimensional object producing method of the first embodiment. The process flow described above will be described according to the steps represented by S in the flowchart of FIG. 3.

First, in the step S1, the control unit of the three-dimensional object producing apparatus forms a powder layer formed of the powder and moves the flow to S2.

In the step S2, the control unit of the three-dimensional object producing apparatus prints the object forming liquid over the powder layer based on slice data, and moves the flow to S3.

In the step S3, the control unit of the three-dimensional object producing apparatus determines whether the slice data is the final layer.

In the step S3, the control unit of the three-dimensional object producing apparatus moves the flow to S1 when it is determined that the slice data is not the final layer, and moves the flow to S4 when it is determined that the slice data is the final data.

In the step S4, the control unit of the three-dimensional object producing apparatus takes out the formed solidified product from the object forming tank, and moves the flow to S5.

In the step S5, the control unit of the three-dimensional object producing apparatus heats the taken-out solidified product using a fixed temperature vacuum drier in a vacuum atmosphere at 100 degrees C for 2.5 hours, and moves the flow to S6.

In the step S6, the control unit of the three-dimensional object producing apparatus coarsely removes the powder at the non-object forming part, and moves the flow to S7. Examples of the method for coarsely removing the powder at the non-object forming part include a method of removing an excessive powder at the non-object forming part by air blowing.

In the step S7, the control unit of the three-dimensional object producing apparatus dips the solidified product (cured product) in the powder removing liquid, and moves the flow to S8.

In the step S8, the control unit of the three-dimensional object producing apparatus dries and sinters the solidified product (cured product), and terminates the flow.

### <Second embodiment>

The three-dimensional object producing method of the second embodiment obtains an intended object by providing between formation of a powder layer and application of an object forming liquid, a heating step as application of energy for performing heating with a heater in a solidified product forming step of applying the object forming liquid to a powder containing an organic material over the surface of a base material, to solidify the organic material in the powder and form a solidified product, repeating these steps, and after completing the final solidified product producing step, performing a powder removing step.

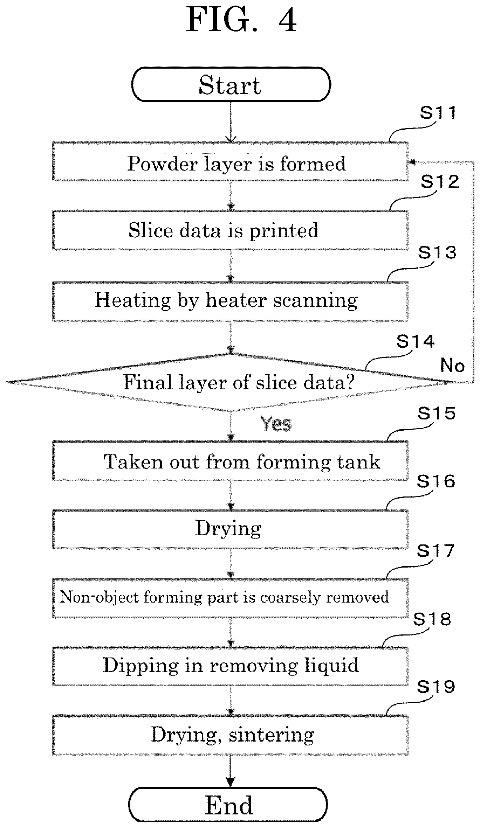

FIG. 4 is a flowchart illustrating an example of a process flow of the three-dimensional object producing method of the second embodiment. The process flow described above will be described according to the steps represented by S in the flowchart of FIG. 4.

First, in the step S11, the control unit of the three-dimensional object producing apparatus forms a powder layer formed of the powder, and moves the flow to S12.

In the step S12, the control unit of the three-dimensional object producing apparatus prints the object forming liquid over the powder layer based on slice data, and moves the flow to S13.

In the step S13, the control unit of the three-dimensional object producing apparatus heats the powder layer with a heater and moves the flow to S14.

In the step S14, the control unit of the three-dimensional object producing apparatus determines whether the slice data is the final layer.

In the step S14, the control unit of the three-dimensional object producing apparatus moves the flow to S11 when it is determined that the slice data is not the final layer, and moves the flow to S15 when it is determined that the slice data is the final layer.

In the step S15, the control unit of the three-dimensional object producing apparatus takes out the formed solidified product from the object forming tank, and moves the flow to S16.

In the step S16, the control unit of the three-dimensional object producing apparatus heats the taken-out solidified product, and moves the flow to S17.

In the step S17, the control unit of the three-dimensional object producing apparatus coarsely removes the powder at the non-object forming part and moves the flow to S18. Examples of the method for coarsely removing the powder at the non-object forming part include a method of removing an excessive powder at the non-object forming part by air blowing.

In the step S18, the control unit of the three-dimensional object producing apparatus dips the solidified product in the removing liquid, and moves the flow to S19.

In the step S19, the control unit of the three-dimensional object producing apparatus dries and sinters the solidified product, and terminates the flow.

### <Third embodiment>

The three-dimensional object producing method of the third embodiment obtains an intended object by providing between formation of a powder layer and application of an object forming liquid, a heating step as application of energy by infrared irradiation in a solidified product forming step of applying the object forming liquid to a powder containing an organic material over the surface of a base material, to cure the organic material in the powder and form a solidified product, repeating these steps, and after completing the final solidified product producing step, performing a powder removing step.

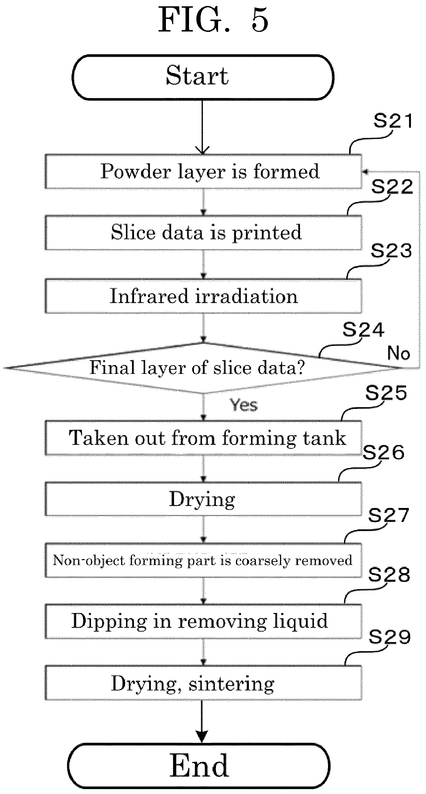

FIG. 5 is a flowchart illustrating an example of a process flow of the three-dimensional object producing method of the third embodiment. The process flow described above will be described according to the steps represented by S in the flowchart of FIG. 5.

First, in the step S21, the control unit of the three-dimensional object producing apparatus forms a powder layer formed of the powder, and moves the flow to S22.

In the step S22, the control unit of the three-dimensional object producing apparatus prints the object forming liquid over the powder layer based on slice data and moves the flow to S23.

In the step S23, the control unit of the three-dimensional object producing apparatus heats the powder layer by infrared irradiation and moves the flow to S24.

In the step S24, the control unit of the three-dimensional object producing apparatus determines whether the slice data is the final layer.

In the step S24, the control unit of the three-dimensional object producing apparatus moves the flow to S21 when it is determined that the slice data is not the final layer and moves the flow to S25 when it is determined that the slice data is the final layer.

In the step S25, the control unit of the three-dimensional object producing apparatus takes out the formed solidified product from the object forming tank and moves the flow to S26.

In the step S26, the control unit of the three-dimensional object producing apparatus dries the taken-out solidified product and moves the flow to S27.

In the step S27, the control unit of the three-dimensional object producing apparatus coarsely removes the powder at the non-object forming part and moves the flow to S28. Examples of the method for coarsely removing the powder at the non-object forming part include a method of removing an excessive powder at the non-object forming part by air blowing.

In the step S28, the control unit of the three-dimensional object producing apparatus dips the solidified product in the removing liquid and moves the flow to S29.

In the step S29, the control unit of the three-dimensional object producing apparatus dries and sinters the solidified product and terminates the flow.

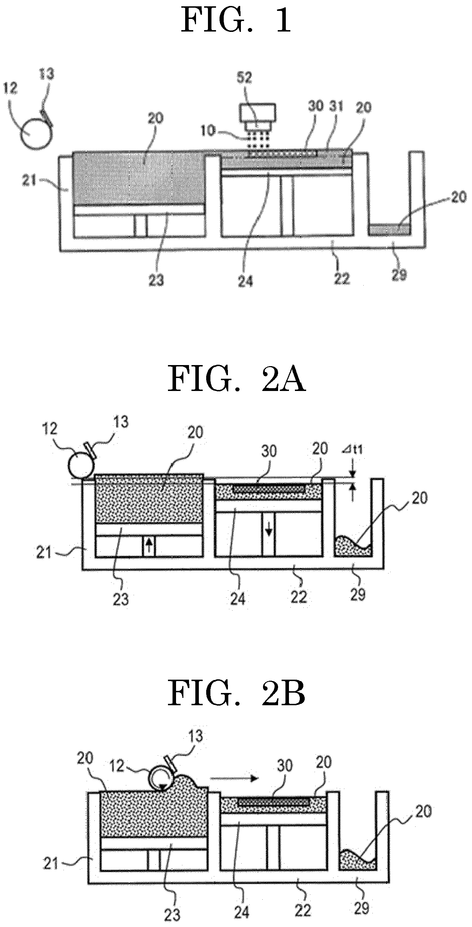

An embodiment of the three-dimensional object producing method and the three-dimensional object producing apparatus of the present disclosure will be described with reference to FIG. 1. FIG. 1 illustrates a timing during object production.

The three-dimensional object producing apparatus of FIG. 1 includes a supplying tank 21, a forming tank 22, and an excessive powder receptacle 29. The supplying tank 21 and the forming tank 22 include a supplying stage 23 and a forming stage 24 that are movable in the vertical direction, respectively. A powder 20 for producing a three-dimensional object is placed over the forming stage 24 provided in the forming tank 22, to form a powder layer 31 formed of the powder 20.

A flattening roller 12 configured to supply the powder 20 from the supplying tank 21 to the forming tank 22 and level the surface of the powder 20 in the forming tank 22 to form a powder layer 31 is provided above the supplying tank 21 and the forming tank 22. A powder removing plate 13 serving as a powder removing member contacting the circumferential surface of the flattening roller 12 and configured to remove the powder 20 attached on the flattening roller 12 is disposed on the flattening roller 12. Of the powder 20 transferred and supplied by the flattening roller 12, any excessive powder 20 that has not been used for forming the powder layer 31 falls into the excessive powder receptacle 29.

An inkjet head 52 configured to discharge an object forming liquid 10 toward the powder 20 in the forming tank 22 is provided above the forming tank 22. The inkjet head 52 discharges and applies liquid droplets to the powder layer 31 densely laid in the form of a layer in the forming tank 22, to form an object forming layer 30.

The position to which the object forming liquid 10 is dropped is determined based on two-dimensional image data (slice data) representing a finally desired three-dimensional shape as a plurality of sliced plane layers.

After an image is printed over one layer, the supplying stage 23 in the supplying tank 21 is moved upward and the forming stage 24 in the forming tank 22 is moved downward. The flattening roller 12 moves the powder corresponding to the height difference generated in this way into the forming tank 22.

In this way, a new powder layer is formed over the surface of the powder layer printed previously. The thickness of one powder layer is about several tens of micrometers or greater but 100 micrometers or less.

An image is printed over the newly formed powder layer based on the slice data for the second layer. This series of process is repeated to obtain a solidified product (green body) having a three-dimensional shape.

Next, the flow of object production according to the three-dimensional object producing method of the present disclosure will be described with reference to FIG. 2A to FIG. 2E.

FIG. 2A to FIG. 2E are exemplary views used for describing the flow of object production. Description will be started from a state where the first object forming layer 30 has been formed over the forming stage 24 of the forming tank 22. When forming the next object forming layer over the first object forming layer 30, the supplying stage 23 of the supplying tank 21 is moved upward and the forming stage 24 of the forming tank 22 is moved downward as illustrated in FIG. 2A.

Here, the distance by which the forming stage 24 is moved downward is set in a manner that the interval (layer lamination pitch) between the top surface of the surface (powder surface) of the powder layer 31 in the forming tank 22 and the lower portion (the lower tangential portion) of the flattening roller 12 becomes Δt1. The interval Δt1 is not particularly limited and is preferably about from several tens of micrometers through 100 micrometers.

Next, the flattening roller 12 is moved toward the forming tank 22 while being rotated in a reverse direction (direction of the arrow) as illustrated in FIG. 2B, to transfer and supply the powder 20 positioned above the top surface level of the supplying tank 21 to the forming tank 22 (powder supplying).

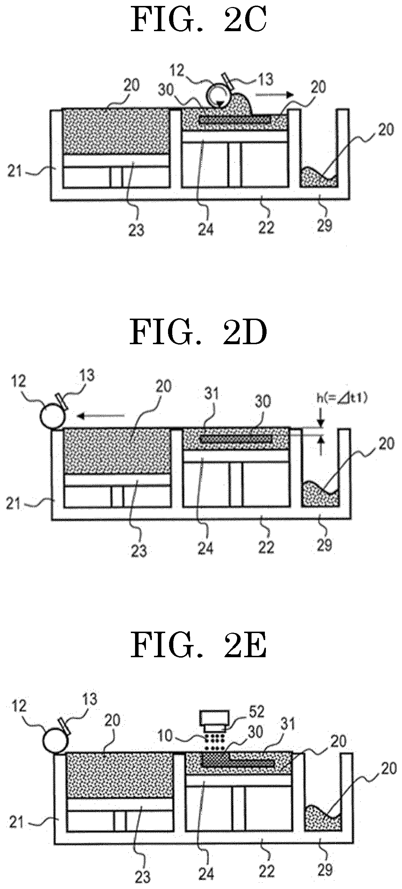

Further, the flattening roller 12 is moved in parallel with the stage surface of the forming stage 24 of the forming tank 22 as illustrated in FIG. 2C, to form a powder layer 31 having a predetermined thickness Δt1 over the forming stage 24 of the forming tank 22 (flattening). Here, any excessive powder 20 that is not used for forming the powder layer 31 falls into the excessive powder receptacle 29.

After the powder layer 31 is formed, the flattening roller 12 is moved toward the supplying tank 21 and returned (restored) to the initial position (home position) as illustrated in FIG. 2D.

Subsequently, the head 52 of the liquid discharging unit 50 discharges liquid droplets 10 of the object forming liquid as illustrated in FIG. 2E, to form an object forming layer 30 having a desired shape in the next powder layer 31 in a laminated manner.

Next, formation of a powder layer and discharging of the object forming liquid described above are repeated to form a new object forming layer 30. Here, the new object forming layer 30 and the underlying object forming layers 30 are integrated and constitute a part of a solidified product. Hereinafter, formation of a powder layer and discharging of the object forming liquid are performed repeatedly, to complete forming a solidified product (green body).

The three-dimensional object producing method and the three-dimensional object forming apparatus of the present disclosure described above can produce a three-dimensional object having a complicated stereoscopic (three-dimensional (3D)) shape easily, efficiently, without shape collapse before, for example, sintering, and with a good dimensional accuracy, using the object forming liquid of the present disclosure or the kit for producing a three-dimensional object of the present disclosure.

A three-dimensional object obtained in this ways and a sintered body of the three-dimensional object have a sufficient strength and an excellent dimensional accuracy, can reproduce, for example, minute bosses and recesses and curved surfaces, has an excellent aesthetic appearance and a high quality, and can be suitably used for various applications.

### EXAMPLES

The present disclosure will be described below by way of Examples. The present disclosure should not be construed as being limited to these Examples.

### (Example 1)

### <Preparation of powder>

### -Preparation of coating liquid 1-

Acetone (114 parts by mass) was mixed with a polyacryl polyol resin (6 parts by mass) (obtained from Toeikasei Co., Ltd., 9515) having a hydroxyl value 180 mgKOH/g and serving as an organic material. The resultant was stirred for one hour with a three-one motor (obtained from Shinto Scientific Co., Ltd., BL600) while being heated to 50 degrees C in water bath, to dissolve the polyacryl polyol resin in the organic solvent (acetone) and prepare a 5% by mass polyacryl polyol resin dissolved liquid (120 parts by mass). The prepared liquid obtained in this way was used as a coating liquid 1.

The viscosity of the polyacryl polyol resin in the 5% by mass (w/w%) solution at 25 degrees C measured with a viscometer (a rotational viscometer obtained from Brookfield Co., Ltd., DV-E VISCOMETER HADVE 115 TYPE) was from 3.0 mPa·s through 4.0 mPa.s.

### -Coating of coating liquid 1 over surface of base material-

Next, with a commercially available coating machine (obtained from Paulec Co., Ltd., MP-01), a AlSi₁₀Mg powder (100 parts by mass) (obtained from Toyo Aluminium K.K., Si₁₀Mg-30BB, with a volume average particle diameter of 35 micrometers) serving as a base material was coated with the coating liquid 1 with a coating thickness (average thickness) of 300 micrometers. During the coating, the coating time and the coating intervals were appropriately adjusted by timely performing sampling in the middle of the coating, in a manner that the coating thickness (average thickness) of the coating liquid 1 would be 300 micrometers and the surface coating ratio (%) would be 85%.

After the coating was completed, acrylic resin-made resin particles (obtained from Soken Chemical & Engineering Co., Ltd., MP1451) were added in a manner that the surface coating ratio over the surface of the coating film would be 20%, and mixed using a mixer (obtained from Shinmaru Enterprises Corporation, DYNO-MILL) for 5 minutes at 100 rpm, to obtain a powder 1. The methods for measuring the coating thickness of the coating film and the surface coating ratio of the coating film and the coating conditions are described below. The coating thickness of the coating film and the surface coating ratio of the coating film were measured before the resin particles were mixed.

### <Coating thickness (average thickness) of coating film>

For the coating thickness (average thickness), the surface of the powder 1 was polished with emery paper and lightly polished with a cloth impregnated with toluene to dissolve the water-soluble resin portion and produce a sample for observation. Next, the exposed boundary portion between the base material portion and the organic soluble resin portion was observed with a field emission-scanning electron microscope (FE-SEM), to measure the boundary portion as the coating thickness. Ten positions were measured, and the measurements were averaged as a coating thickness (average thickness).

### <Surface coating ratio of coating film>

A backscattered electron image (ESB) was captured using a field emission-scanning electron microscope (FE-SEM) under the conditions described below with field of view settings at which about ten particles of the powder 1 would be contained within the screen, and was binarized by image processing using IMAGE J software. Seeing a black portion as a coated portion and a white portion as a base material portion, the ratio [area of black portions/(area of black portions+area of white portions)× 100] was calculated per particle. Ten particles were measured and the average of the ten particles was used as the surface coating ratio (%).

### -SEM observation conditions-

- Signal: ESB (backscattered electron image)
- EHT: 0.80 kV
- ESB Grid: 700 V
- WD: 3.0 mm
- Aperture Size: 30.00 micrometers
- Contrast: 80%
- Magnification: set per sample in a manner that about ten particles would be contained in the horizontal direction of the screen

### <Coating conditions>

### -Spray settings

Nozzle type: 970
Nozzle diameter: 1.2 mm
Coating liquid discharging pressure: 4.7 Pa·s
Coating liquid discharging speed: 3 g/min
Amount of air atomized: 50 NL/min

### -Rotor settings

Rotor type: M-1
Rotation speed: 60 rpm
Rotation number: 400%

### -Air current settings

Air feeding temperature: 80 degrees C
Air feeding rate: 0.8 m³/min
Bag filter dusting pressure: 0.2 MPa
Bag filter dusting time: 0.3 seconds
Bag filter interval: 5 seconds

### -Coating time

### 40 minutes

The average particle diameter of the obtained powder 1 measured with a commercially available particle diameter measuring instrument (obtained from Nikkiso Co., Ltd., MICROTRAC HRA) was 35 micrometers.

### -Preparation of object forming liquid 1-

As presented in Table 1 and Table 2, block isocyanate 1 having a block dissociation temperature of 90 degrees C (obtained from Mitsui Chemicals, Inc., XWB-F282) (20% by mass), diethyl succinate (obtained from Kanto Chemical Co., Inc.) (78% by mass), and an acrylic resin serving as a viscosity modifier (2.0% by mass) were added together and stirred with a stirrer for 60 minutes. The stirring speed was 500 rpm. Subsequently, the obtained mixture solution was filtrated through a filter having a pore diameter of 1 micrometer, to obtain an object forming liquid 1.

The viscosity of the obtained object forming liquid 1 was measured in the manner described below. The result is presented in Table 2.

### -Measurement of viscosity of object forming liquid-

The viscosity of the object forming liquid 1 was measured with a rotational viscometer (TVE-25L) obtained from Toki Sangyo Co., Ltd. The temperature of the measuring part was set to 25 degrees C using an attached thermostat. The rotation speed was set to 100 rpm, 50 rpm, and 20 rpm in accordance with the viscosity of the object forming liquid, and the value measured five minutes after the start of the measurement was recorded as the viscosity of the object forming liquid.

### <Three-dimensional object production>

(1) First, using the three-dimensional object producing apparatus illustrated in FIG. 1, the powder 1 was transferred from the supplying tank to the forming tank, to form a thin layer of the powder 1 having an average thickness of 84 micrometers over an object forming stage.
(2) Next, the object forming liquid 1 was applied (discharged) from nozzles of a known inkjet discharging head to the surface of the formed thin layer of the powder 1, to dissolve polyacryl polyol in diethyl succinate contained in the object forming liquid and compatibilize polyacryl polyol with the compound (block isocyanate 1 having a block dissociation temperature of 90 degrees C) that can develop a reactively active group by application of energy contained in the object forming liquid 1.
   Here, the ratio ([NCO]/[OH]) of isocyanate groups [NCO] developed by polyisocyanate having a blocked isocyanate group to hydroxyl groups [OH] of polyacryl polyol in the region to which the object forming liquid was applied was 0.3.
(3) Next, the operations of (1) and (2) were repeated until the total average thickness became a predetermined value of 3 mm, to sequentially laminate solidified thin layers of the powder 1, and the resultant was subjected to the heating step using a drier and maintained at 100 degrees C in a vacuum atmosphere for 2 hours, to allow polyacryl polyol to undergo a reaction (solidification) with the compound that can develop a reactively active group by application of energy.
   The heated three-dimensional object was blown with air to remove any excessive powder, and further dipped for 1 hour in triethylene glycol dimethyl ether (obtained from FUJIFILM Wako Pure Chemical Corporation) serving as a powder removing liquid that can dissolve an organic material (powder removing step). As a result, the three-dimensional object did not undergo collapse or warpage and had a strength enough to endure handling.
   The shape retention property of the three-dimensional object after dipping was evaluated according to the criteria described below. The result is presented in Table 3.
(4) The temperature of the solidified product obtained in (3) above was raised to 400 degrees C for 1 hour using a drier in a vacuum atmosphere, and maintained at 400 degrees C for 9 hours, to perform the degreasing step. Subsequently, the temperature of the solidified product was raised to 520 degrees C for 0.2 hours and maintained for 0.5 hours, to perform a sintering treatment. As a result, a three-dimensional object (a sintered body) densified to a relative density of 90% or higher was obtained. Here, degreasability predicted to inhibit sintering was evaluated according to the criteria described below. The result is presented in Table 3.

### <Long-term discharging reliability of object forming liquid>

An inkjet discharging evaluation apparatus (obtained from Ricoh Company, Ltd., an extended coater, EV2500) including an inkjet head (obtained from Ricoh Company, Ltd., industrial inkjet, RICOH MH5420/5440) filled with the object forming liquid was left to stand for 1 week in a capped state, and long-term discharging stability of the inkjet head was evaluated according to the criteria described below.

### [Evaluation criteria]

D: A deposit or an adherent matter occurred in the inkjet nozzles, and the apparatus was unable to discharge even after a maintenance operation such as pressurization and suctioning was performed.
C: A deposit or an adherent matter occurred in the inkjet nozzles, but the apparatus became able to discharge after a maintenance operation such as pressurization and suctioning was performed.
B: No deposit occurred in the inkjet nozzles, and the apparatus became able to discharge after a maintenance operation such as pressurization and suctioning was performed.
A: No deposit occurred in the inkjet nozzles, and the apparatus was able to discharge without a maintenance operation such as pressurization and suctioning.

### <Shape retention property after dipping>

D: The solidified product (green body) was unable to maintain the shape and disintegrated when dipped in the powder removing liquid.
C: The solidified product (green body) was able to maintain the shape when dipped in the powder removing liquid, but was easily bent and warped by an external force such as the own weight.
B: The solidified product (green body) was able to maintain the shape when dipped in the powder removing liquid, but the strength of the solidified product after dipping became slightly weaker than before dipping.
A: The solidified product (green body) was able to maintain the shape when dipped in the powder removing liquid, and had almost the same strength as before dipping.

Next, removability of the powder for producing an object at a non-object forming part due to the drying step in (3) above was evaluated according to the criteria described below. The result is presented in Table 3.

### <Non-object forming part removability>

D: The excessive powder became an adherent matter due to the drying step, and a time of 2 hours or longer was needed to remove the excessive powder by dipping in the removing liquid.
C: The excessive powder became an adherent matter due to the drying step, and removal of the excessive powder by dipping in the removing liquid was completed in shorter than 2 hours.
B: The excessive powder became a loose adherent matter due to the drying step, and it was possible to remove the excessive powder by applying a weak power.
A: No adherent matter occurred due to the drying step, and the excessive powder had fluidity.

Next, long-term discharging stability of the object forming liquid was evaluated according to the criteria described below. The result is presented in Table 3.

### <Degreasability>

D: The residual ratio of the organic material in the sintered body was 30% or higher when the ratio of the organic material before sintering was assumed to be 100%.
C: The residual ratio of the organic material in the sintered body was 10% or higher but lower than 30% when the ratio of the organic material before sintering was assumed to be 100%.
B: The residual ratio of the organic material in the sintered body was 5% or higher but lower than 10% when the ratio of the organic material before sintering was assumed to be 100%.
A: The residual ratio of the organic material in the sintered body was 2% or higher but lower than 5% when the ratio of the organic material before sintering was assumed to be 100%.

### (Comparative Example 1 and Examples 2 to 10)

A three-dimensional object was produced in the same manner as in Example 1 except that unlike in Example 1, the conditions were changed to as presented in Table 1 and Table 2, and various properties of the three-dimensional object were evaluated in the same manners as in Example 1. The results are presented in Table 3.

**Table 1**

| | Object forming liquid | | | | |
|---|---|---|---|---|---|
| | Organic solvent | | Compound that can develop reactively active group by application of energy | | |
| | Kind | Content (% by mass) | Kind | Block dissociation temperature (degree C) | Content (% by mass) |
| Ex. 1 | Diethyl succinate | 78.0 | Block polyisocyanate 1 | 90 | 20.0 |
| Ex. 2 | Diethyl succinate | 95.0 | Block polyisocyanate 1 | 90 | 3.0 |
| Ex. 3 | Diethyl succinate | 93.0 | Block polyisocyanate 1 | 90 | 5.0 |
| Ex. 4 | Diethyl succinate | 88.0 | Block polyisocyanate 1 | 90 | 10.0 |
| Ex. 5 | Diethyl succinate | 58.0 | Block polyisocyanate 1 | 90 | 40.0 |
| Ex. 6 | Diethyl succinate | 78.0 | Block polyisocyanate 2 | 100 | 20.0 |
| Ex. 7 | Diethyl succinate | 61.0 | Block polyisocyanate 3 | 120 | 37.0 |
| Ex. 8 | Diethyl succinate | 73.9 | Block polyisocyanate 4 | 140 | 24.1 |
| Ex. 9 | Diethyl succinate | 78.0 | Block polyisocyanate 1 | 90 | 20.0 |
| Ex. 10 | Diethyl succinate | 78.0 | Block polyisocyanate 1 | 90 | 20.0 |
| Comp. Ex. 1 | Diethyl succinate | 70.4 | Polyisocyanate | None | 27.6 |

| | | | | | |
|---|---|---|---|---|---|
| *Block polyisocyanate 1 (with a block dissociation temperature of 90 degrees C, obtained from Mitsui Chemicals, Inc.) *Block polyisocyanate 2 (with a block dissociation temperature of 100 degrees C, obtained from Mitsui Chemicals, Inc.) *Block polyisocyanate 3 (with a block dissociation temperature of 120 degrees C, obtained Mitsui Chemicals, Inc.) *Block polyisocyanate 4 (with a block dissociation temperature of 140 degrees C, obtained from Mitsui Chemicals, Inc.) * Polyisocyanate (with no block dissociation temperature, obtained from Mitsui Chemicals, Inc.) | | | | | |

**Table 2**

| | Object forming liquid | | | Ratio ([NCO]/[OH]) in object forming liquid-applied region | Heating temperature (degree C) |
|---|---|---|---|---|---|
| | Viscosity modifier | | Viscosity (mPa·s) | | |
| | Kind | Content (% by mass) | | | |
| Ex. 1 | Acrylic resin | 2.0 | 11 | 0.3 | 100 |
| Ex. 2 | Acrylic resin | 2.0 | 10 | 0.045 | 100 |
| Ex. 3 | Acrylic resin | 2.0 | 9 | 0.075 | 100 |
| Ex. 4 | Acrylic resin | 2.0 | 9 | 0.15 | 100 |
| Ex. 5 | Acrylic resin | 2.0 | 14 | 0.6 | 100 |
| Ex. 6 | Acrylic resin | 2.0 | 11 | 0.3 | 100 |
| Ex. 7 | Acrylic resin | 2.0 | 11 | 0.3 | 100 |
| Ex. 8 | Acrylic resin | 2.0 | 11 | 0.3 | 100 |
| Ex. 9 | Acrylic resin | 2.0 | 11 | 0.3 | 80 |
| Ex. 10 | Acrylic resin | 2.0 | 11 | 0.3 | 120 |
| Comp. Ex. 1 | Acrylic resin | 2.0 | 9 | 0.3 | 100 |

**Table 3**

| | Long-term discharging reliability | Shape retention property after dipping | Non-object forming part removability | Degreasability |
|---|---|---|---|---|
| Ex. 1 | B | A | B | B |
| Ex. 2 | B | A | B | B |
| Ex. 3 | A | B | B | A |
| Ex. 4 | A | C | B | A |
| Ex. 5 | B | C | B | C |
| Ex. 6 | B | A | B | B |
| Ex. 7 | A | B | B | B |
| Ex. 8 | A | C | B | B |
| Ex. 9 | B | C | A | B |
| Ex. 10 | B | A | C | B |
| Comp. Ex. 1 | D | A | B | A |

From the results of Table 1 to Table 3, it was revealed that Examples 1 to 10 in which the solidified product producing step of applying the object forming liquid to the powder containing a base material and an organic material, to form a solidified product was provided and the object forming liquid contained a compound that can develop a reactively active group by application of energy were good in long-term discharging stability, shape retention property after dipping in the powder removing liquid, non-object forming part removability, and degreasability.

It was revealed, on the other hand, that Comparative Example 1 in which the compound that can develop a reactively active group by application of energy was not used as a cross-linking agent was unable to achieve an expected effect in long-term discharging reliability, because an adherent matter occurred in inkjet nozzles after leaving to stand, and discharging was unsuccessful even after a maintenance operation was performed.

Aspects of the present disclosure are, for example, as follows.
<1> A three-dimensional object producing method including
   applying an object forming liquid to a powder containing a base material and an organic material, to form a solidified product,
   wherein the object forming liquid contains a compound that can develop a reactively active group by application of energy.
<2> The three-dimensional object producing method according to <1>, further including after the applying,
   removing powder attached on the solidified product from the solidified product using a powder removing liquid.
<3> The three-dimensional object producing method according to <1> or <2>,
   wherein the reactively active group contains an isocyanate group.
<4> The three-dimensional object producing method according to any one of <1> to <3>,
   wherein the compound that can develop a reactively active group by application of energy is polyisocyanate having a blocked isocyanate group.
<5> The three-dimensional object producing method according to any one of <1> to <4>,
   wherein the application of energy is heating, and a temperature for the heating is 80 degrees C or higher but 120 degrees C or lower.
<6> The three-dimensional object producing method according to any one of <2> to <5>,
   wherein the powder removing liquid contains at least one selected from the group consisting of ketones, halogens, alcohols, esters, ethers, hydrocarbons, glycols, glycol ethers, glycol esters, pyrrolidones, amides, amines, and carbonic acid esters.
<7> The three-dimensional object producing method according to any one of <4> to <6>,
   wherein the organic material contains a hydroxyl group, and
   wherein the ratio ([NCO]/[OH]) of an isocyanate group [NCO] developed by the polyisocyanate having a blocked isocyanate group to the hydroxyl group [OH] in a region in which the object forming liquid is applied is 0.075 or greater.
<8> The three-dimensional object producing method according to any one of <1> to <7>,
   wherein the base material is selected from the group consisting of metals and ceramics.
<9> The three-dimensional object producing method according to any one of <2> to <8>, further including after the removing,
   sintering the solidified product.
<10> An object forming liquid including
   a compound that can develop a reactively active group by application of energy,
   wherein the object forming liquid is applied to a powder containing a base material and an organic material soluble in an organic solvent, to form a solidified product.
<11> The object forming liquid according to <10>,
   wherein the reactively active group contains an isocyanate group.
<12> The object forming liquid according to <10> or <11>,
   wherein the compound that can develop a reactively active group by application of energy is polyisocyanate having a blocked isocyanate group.
<13> The object forming liquid according to any one of <10> to <12>,
   wherein the application of energy is heating, and a temperature for the heating is 80 degrees C or higher but 120 degrees C or lower.
<14> A kit for producing a three-dimensional object, the kit including:
   a powder containing a base material and an organic material;
   an object forming liquid for solidifying the powder to form a solidified product; and
   a powder removing liquid for removing powder attached on the solidified product from the solidified product,
   wherein the object forming liquid contains a compound that can develop a reactively active group by application of energy.

The three-dimensional object producing method according to any one of <1> to <9>, the object forming liquid according to any one of <10> to <13>, and the kit for producing a three-dimensional object according to <14> can solve the various problems in the related art and can achieve the object of the present disclosure.

## Claims

1. A three-dimensional object producing method comprising
applying an object forming liquid to a powder containing a base material and an organic material, to form a solidified product,
wherein the object forming liquid contains a compound that can develop a reactively active group by application of energy.

2. The three-dimensional object producing method according to claim 1, comprising after the applying,
removing powder attached on the solidified product from the solidified product using a powder removing liquid.

3. The three-dimensional object producing method according to claim 1 or 2,
wherein the reactively active group contains an isocyanate group.

4. The three-dimensional object producing method according to any one of claims 1 to 3,
wherein the compound that can develop a reactively active group by application of energy is polyisocyanate having a blocked isocyanate group.

5. The three-dimensional object producing method according to any one of claims 1 to 4,
wherein the application of energy is heating, and a temperature for the heating is 80 degrees C or higher but 120 degrees C or lower.

6. The three-dimensional object producing method according to any one of claims 2 to 5,
wherein the powder removing liquid contains at least one selected from the group consisting of ketones, halogens, alcohols, esters, ethers, hydrocarbons, glycols, glycol ethers, glycol esters, pyrrolidones, amides, amines, and carbonic acid esters.

7. The three-dimensional object producing method according to any one of claims 4 to 6,
wherein the organic material contains a hydroxyl group, and
wherein the ratio ([NCO]/[OH]) of an isocyanate group [NCO] developed by the polyisocyanate having a blocked isocyanate group to the hydroxyl group [OH] in a region in which the object forming liquid is applied is 0.075 or greater.

8. The three-dimensional object producing method according to any one of claims 1 to 7,
wherein the base material is selected from the group consisting of metals and ceramics.

9. The three-dimensional object producing method according to any one of claims 2 to 8, further comprising after the removing,
sintering the solidified product.

10. An object forming liquid comprising
a compound that can develop a reactively active group by application of energy,
wherein the object forming liquid is applied to a powder containing a base material and an organic material soluble in an organic solvent, to form a solidified product.

11. The object forming liquid according to claim 10,
wherein the reactively active group contains an isocyanate group.

12. The object forming liquid according to claim 10 or 11,
wherein the compound that can develop a reactively active group by application of energy is polyisocyanate having a blocked isocyanate group.

13. The object forming liquid according to any one of claims 10 to 12,
wherein the application of energy is heating, and a temperature for the heating is 80 degrees C or higher but 120 degrees C or lower.

14. A kit for producing a three-dimensional object, the kit comprising:
a powder containing a base material and an organic material;
an object forming liquid for solidifying the powder to form a solidified product; and
a powder removing liquid for removing powder attached on the solidified product from the solidified product,
wherein the object forming liquid contains a compound that can develop a reactively active group by application of energy.
